(19) **Europäisches Patentamt / European Patent Office / Office européen des brevets**

(11) **EP 2 786 831 B1**

(12) **EUROPEAN PATENT SPECIFICATION**

(45) Date of publication and mention of the grant of the patent:
**13.06.2018 Bulletin 2018/24**

(21) Application number: **12853569.7**

(22) Date of filing: **28.11.2012**

(51) Int Cl.:
**B23K 20/00** *(2006.01)* **B23K 20/16** *(2006.01)*
**B23K 20/233** *(2006.01)* **B23K 35/362** *(2006.01)*
**B32B 15/01** *(2006.01)* **C22C 21/02** *(2006.01)*
**C22C 21/12** *(2006.01)* **C22C 9/04** *(2006.01)*
**B23K 35/38** *(2006.01)* **B23K 35/28** *(2006.01)*
**B23K 35/00** *(2006.01)* **B23K 103/18** *(2006.01)*
**B23K 101/00** *(2006.01)* **B23K 103/10** *(2006.01)*
**B23K 103/12** *(2006.01)* **B23K 31/02** *(2006.01)*
**C22C 21/18** *(2006.01)* **C22C 21/16** *(2006.01)*
C22C 9/00 *(2006.01)* C22C 21/04 *(2006.01)*
C22C 21/14 *(2006.01)*

(86) International application number:
**PCT/JP2012/080779**

(87) International publication number:
**WO 2013/081021 (06.06.2013 Gazette 2013/23)**

(54) **ALUMINIUM ALLOY-COPPER ALLOY BOND, AND BONDING METHOD FOR SAME**

VERBINDUNG AUS EINER ALUMINIUMLEGIERUNG UND EINER KUPFERLEGIERUNG SOWIE VERBINDUNGSVERFAHREN DAFÜR

SOUDURE ENTRE UN ALLIAGE D'ALUMINIUM ET UN ALLIAGE DE CUIVRE, ET PROCÉDÉ DE SOUDAGE CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2011 JP 2011265341**

(43) Date of publication of application:
**08.10.2014 Bulletin 2014/41**

(73) Proprietor: **UACJ Corporation**
**Tokyo 100-0004 (JP)**

(72) Inventors:
• **KITAWAKI, Kotaro**
  **Tokyo 100-0004 (JP)**

• **MURASE, Takashi**
  **Tokyo 100-0004 (JP)**

(74) Representative: **Maikowski & Ninnemann Patentanwälte Partnerschaft mbB**
**Postfach 15 09 20**
**10671 Berlin (DE)**

(56) References cited:
WO-A1-2011/152556    JP-A- H10 180 463
JP-A- S54 133 450    JP-A- S58 168 487
JP-A- 2001 334 371    JP-A- 2003 048 077

**Description**

Technical Field

The present invention relates to a bonded body obtained by employing an aluminum alloy as one member to be bonded and a copper alloy as the other member to be bonded, and bonding both the members, and two bonding methods for the bonded body. In the present invention, the term "copper alloy" is defined as including pure copper.

Background Art

A bonded body obtained by bonding an aluminum alloy and a copper alloy to each other is used, for example, in heat exchange apparatuses, including a heat exchanger of fin tube type, piping, and so on in a refrigeration circuit of a refrigerating and air- conditioning apparatus, because such a bonded body is superior in thermal conductivity, etc.

Various bonding methods, such as friction pressure welding, diffusion bonding, explosion bonding, and brazing bonding, are studied as methods for bonding the aluminum alloy and the copper alloy to each other.

According to Patent Document 1 below, bonding is performed through the step of, in a state where an aluminum pipe and a copper pipe are contacted with each other under pressure, rotating one of the pipes to mechanically remove an oxide film on an aluminum surface by friction between both contact surfaces, melting portions to be bonded for softening them with friction heat, and quickly stopping the rotation.

According to Patent Document 2 below, bonding is performed by holding an Al-Si-based brazing material between an aluminum fin and a copper plate in a state where a nickel plating is coated on the copper plate, and heating them.

According to Patent Document 3, bonding (eutectic welding) is performed by contacting an aluminum pipe and a copper pipe with each other at temperature near 550 to 660 °C such that a bonding interface is melted into an alloy state based on a mechanism of generating eutectic melt through solid phase diffusion.

According to Patent Document 4 a method of joining Al or Al alloy member and a metallic component is provided, wherein both members are joined by being about 500°C or less and heating / pressurizing.

List of Related-Art Documents

Patent Documents

Patent Document 1: JP S52-048542 A
Patent Document 2: JP 2002-361408 A
Patent Document 3: JP H09-085467 A
Patent Document 4: JP 2003-048077 A

Summary of the Invention

Problems to be Solved by the Invention

Although, as described above, there are various methods for bonding the aluminum alloy and the copper alloy to each other, a solid phase bonding method, such as the friction pressure welding, has limitations on shapes and dimensions of bonded bodies, and hence has a difficulty in bonding of materials having complicated shapes. On the other hand, the brazing, the eutectic welding, etc. enable a bonding of materials even of complicated shapes because of a large degree of freedom in shape of materials to be bonded. However, the brazing causes large flowage of a liquid phase, thus accompanying with a risk that, for example, a fine flow passage may be filled with a filler metal. Furthermore, an additional cost is required to prepare and apply the filler metal. The eutectic welding accompanies a possibility that materials to be bonded may be deformed by the eutectic reaction.

In view of the problems described above with the related art, an object of the present invention is to provide a novel bonded body of an aluminum alloy and a copper alloy and a novel bonding method for the bonded body which ensures satisfactory bonding performance, which hardly causes deformation attributable to flowage of the alloys during bonding, and which has high reliability.

Means for Solving the Problems

As a result of conducting intensive studies, the inventors have accomplished the present invention by focusing attention to metallographic characteristics of an aluminum alloy that constitutes a member to be bonded, and by finding a novel bonding method utilizing a liquid phase which is generated when the aluminum alloy is heated, in bonding between the aluminum alloy and a copper alloy.

The proposed solution to solve the aforementioned problems is defined in the appended claims.

Advantageous Effect of the Invention

As described above, the bonding method for the aluminum alloy and the copper alloy, according to the present invention, performs the bonding by utilizing a slight liquid phase that is generated in the aluminum alloy to be bonded. The present invention can accomplish the bonding between the aluminum alloy and the copper alloy through metallic connection with high reliability.

Furthermore, according to the present invention, the bonded members themselves do not exhibit large flowage attributable to melting. Because of not using a soldering material, a brazing material, a filler metal, etc., a dimensional change caused upon the bonding is small and a change in shape is hardly generated. Particularly, even in the case of bonding a member that includes a fine flow passage, the flow passage is not closed by intrusion of a liquid phase or deformation of the member. As a result, satisfactory bonding is realized.

Moreover, because a local structure change is not caused near the bond junction, strength embrittlement is hard to occur. In addition, simultaneous multipoint bonding with reliability equivalent to that of the brazing method can be performed without using a pre-placed brazing filler metal, a brazing paste, a brazing sheet clad with a brazing filler material, or the like. As a result, the material cost can be reduced without impairment of bonding properties.

In addition, while the present invention is similar to the diffusion bonding in that deformation attributable to the bonding is less and simultaneous multipoint bonding can be performed, the present invention has, as compared with the diffusion bonding, the following advantages: pressing is not needed, a time required for the bonding can be shortened, and a special step for cleaning the bonded surface is not required even in the case of bonding an aluminum alloy that does not contain Mg.

Brief Description of the Drawings

[Fig. 1] Fig. 1 illustrates a phase diagram of an Al-Si alloy that is a binary eutectic alloy.

[Fig. 2] Fig. 2 is an explanatory view to explain a liquid phase generation mechanism in an aluminum alloy, which is developed with a bonding method for an aluminum alloy and a copper alloy according to the present invention.

[Fig. 3] Fig. 3 is an explanatory view to explain a liquid phase generation mechanism in an aluminum alloy, which is developed with the bonding method for the aluminum alloy and the copper alloy according to the present invention.

[Fig. 4] Fig. 4 is a perspective view illustrating a bonding test piece having an inverted T-shape, which is used for evaluation of a bonding rate.

[Fig. 5] Fig. 5(a) is a perspective view and Fig. 5(b) is a side view to explain a sag test for evaluation of a deformation rate.

Mode for Carrying out the Invention

The present invention will be described in detail below. In the present invention, a predetermined amount of liquid phase generated during heating of an aluminum alloy, which constitutes one of members to be bonded, is utilized in bonding the aluminum alloy to a copper alloy that constitutes the other member to be bonded. In view of the above point, the generation mechanism of the liquid phase is first described in connection with an Al-Si alloy as a binary eutectic alloy.

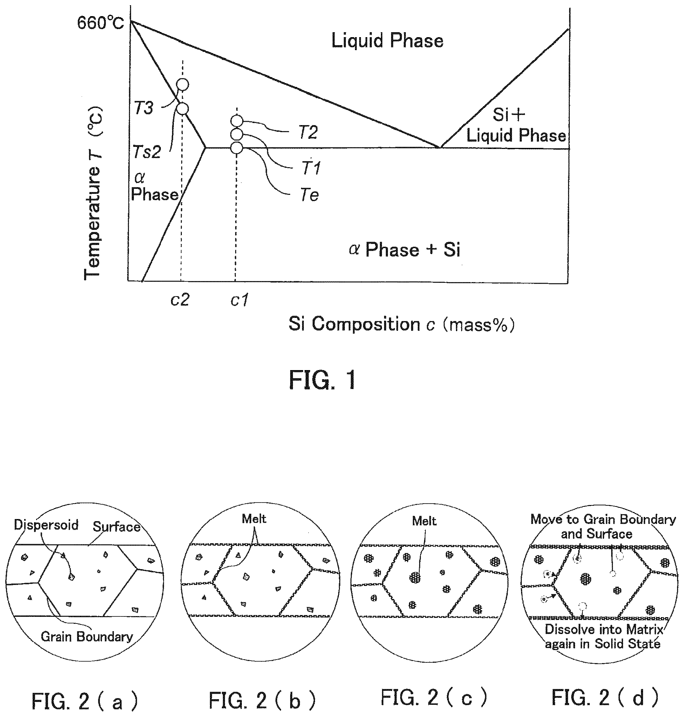

Fig. 1 illustrates a phase diagram of an Al-Si alloy that is a typical binary eutectic alloy. When an aluminum alloy having a Si composition of $c_1$ is heated, generation of a liquid phase begins at a temperature $T_1$ which somewhat exceeds a eutectic temperature (solidus temperature) Te. As shown in Fig. 2 (a), at a temperature which is lower than the eutectic temperature Te, dispersoids are distributed in matrixes sectioned by grain boundaries. When the generation of the liquid phase begins, as shown in Fig. 2 (b), the grain boundaries featuring much segregation in the distribution of dispersoids are melted into liquid phases. Then, as shown in Fig. 2 (c), dispersoid grains of Si, which are main additional elements dispersed in the matrixes of the aluminum alloy material, and peripheries of intermetallic compounds are melted into spherical liquid phases. Further, as shown in Fig. 2 (d), as a time has elapsed, and as a temperature has been elevated, the spherical liquid phases generated in the matrixes are again dissolved in the matrixes due to grain boundary energies, and are moved toward the grain boundaries and the surface due to diffusion in solid. Subsequently, as shown in Fig. 1, when the temperature is elevated to T2, an amount of the liquid phases is increased as being apparent from the phase diagram.

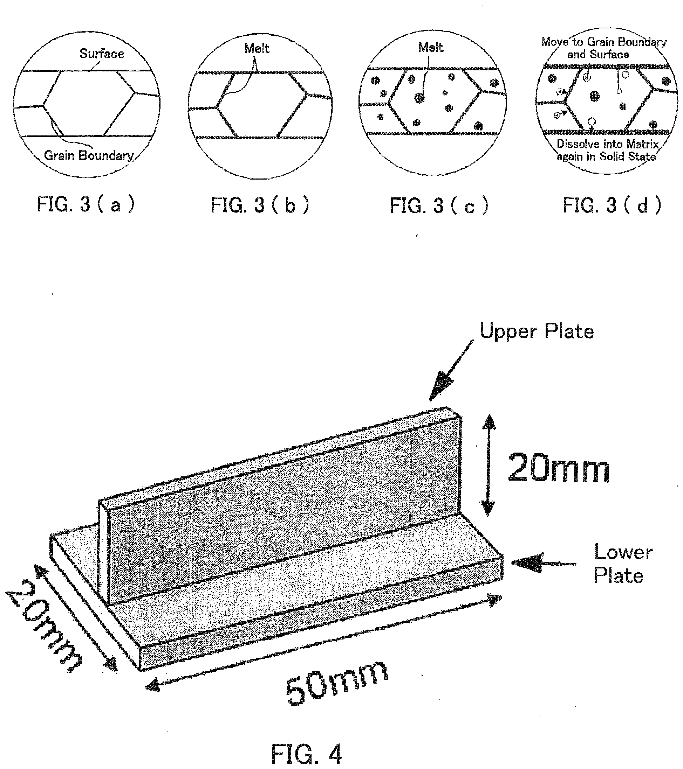

On the other hand, as shown in Fig. 1, when the Si composition of the one aluminum alloy material is c 2 which is smaller than the maximum solubility limit composition, generation of a liquid phase begins at a temperature which somewhat exceeds a solidus temperature Ts2. Provided that, differing from the case of c1, there may be a case where no dispersoid exists in the matrixes just before the metal structure is melted. In this case, as shown in Fig. 3 (b), first, the grain boundaries are melted into liquid phases. Thereafter, as shown in Fig. 3 (c), generation of spherical liquid phases begins at locations at which a density of solute elements is locally high in the matrixes. Similar to the case of c1, as shown in Fig. 3 (d), the spherical liquid phases generated in the matrixes are again dissolved in the matrixes due to grain boundary energies, and are moved toward the grain boundaries and the surface due to diffusion in solid. When the temperature is elevated to T3, an amount of the liquid phases is increased as being apparent from the phase diagram.

Thus, the bleed bonding process according to the present invention utilizes the liquid phases which are locally generated in the interior of the aluminum alloy material. Thus bonding the members to each other and keeping the shape of the members can be consistent with each other by setting the mass of the liquid phase to fall within a preferable range with adjustment of heating temperature. As estimated from the above-described mechanism, with respect to the heating temperature, a copper alloy constituting the other member to be bonded in the present invention requires to be held at the solidus temperature or below. This is because, if the copper alloy is in a state exceeding the solidus temperature, there would be a risk that the copper alloy also starts melting and reacts with the aluminum alloy near a bonding interface, whereby the bonded members cannot maintain their shapes due to rapid acceleration in generation of the liquid phase near the bonding interface.

The basic mechanism in the bonding according to the present invention is as per discussed above. The features of the present invention will be described in detail below.

A. Components of Aluminum Alloy Material

Cu: 3.0 % to 8.0 %

If a Cu content of the aluminum alloy is less than 3.0 %, the liquid phase would not bleed sufficiently and the bonding would be incomplete. On the other hand, if the Cu content is more than 8.0 %, an amount of Al-Cu-based compounds in the aluminum alloy would be increased, and the quantity of the generated liquid phase would also be increased. This would result in that material strength during the heating is extremely reduced, and a difficulty is caused in maintaining the shape of a structure. Moreover, if the Cu content is more than 8.0 %, there would be a risk that rolling is difficult to carry out and desired materials cannot be manufactured. Accordingly, the Cu content in the aluminum alloy used in the present invention is set to be 3.0 % to 8.0 %. As much as a plate thickness thickens and a heating temperature rise, the quantity of the bleeding liquid phase increases. However, the quantity of the liquid phase required during the heating depends on the shape of the structure. It is hence desired that the Cu content and bonding conditions (such as temperature and time) are adjusted as required.

Si: 0.1 % to 10 %

If a Si content of the aluminum alloy is less than 0.1 %, the liquid phase would not bleed sufficiently and the bonding would be incomplete. On the other hand, if the Si content is more than 10.0 %, the number of Si grains in the aluminum alloy would be increased, and the quantity of the generated liquid phase would also be increased. Therefore, material strength during the heating would be reduced extremely, and a difficulty would be caused in maintaining the shape of the structure. Moreover, if the Si content is more than 10.0 %, there would be a risk that rolling is difficult to carry out and desired materials cannot be manufactured. Accordingly, the Si content in the aluminum alloy used in the present invention is set to be 0.1 % to 10 %. The quantity of the bleeding liquid phase increases at a larger plate thickness and at a higher heating temperature. However, the quantity of the liquid phase required during the heating depends on the shape of the structure. It is hence desired that the Si content and bonding conditions (such as temperature and time) are adjusted as required.

$$C + 2.4 \times S \geq 7.8$$

Even in the case where the Cu content of the aluminum alloy is 3.0 % to 8.0 % and the Si content thereof is 0.1 % to 10 %, if C + 2.4 × S (where C (%) is a Cu composition and S (%) is a Si composition) is less than 7.8, the liquid phase would not be generated sufficiently and the amount of the supplied liquid phase would be insufficient, whereby the bonding would be incomplete. Therefore, C + 2.4 × S in the aluminum alloy used in the present invention is set to be 7.8 or more.

From the viewpoint of developing the basic function of the aluminum alloy in the present invention, it is just required to specify the contents of Cu and Si. However, other elements may be added singly or in combination to improve bonding performance. Those selective additive elements will be described below.

One or more of Mg, Zn and Ni may be added in predetermined amount(s) to further improve the bonding performance.

Mg: 0.05 % to 2.0 %

Mg can lower the solidus temperature of the alloy, and enables reliable bonding to be performed at a lower temperature. Such an effect would be hardly obtained if Mg is added in amount of less than 0.05 %. On the other hand, if the amount of Mg is more than 2.0 %, there would be a risk that rolling is difficult to carry out and desired materials cannot be manufactured. Accordingly, Mg is preferably added in the range of 0.05 % to 2.0 %. A more preferable amount of Mg is 0.1 % to 1.0 %.

Zn: 0.05 % to 6.0 %

Zn can lower the solidus temperature of the alloy, and enables reliable bonding to be performed at a lower temperature. Such an effect would be hardly obtained if Zn is added in amount of less than 0.05 %. On the other hand, if the amount of added Zn is more than 6.0 %, there would be a risk that rolling is difficult to carry out and desired materials cannot be manufactured. Accordingly, Zn is preferably added in the range of 0.05 % to 6.0 %. A more preferable amount of Zn is 0.5 % to 2.0 %.

Ni: 0.05 % to 2.0 %

Ni can lower the solidus temperature of the alloy, and enables reliable bonding to be performed at a lower temperature. Such an effect would be hardly obtained if Ni is added in amount of less than 0.05 %. On the other hand, if the amount added Ni is more than 2.0 %, there would be a risk that intermetallic compounds are excessively generated during manufacturing of the materials and rolling is difficult to carry out. Accordingly, Ni is preferably added in the range of 0.05 % to 2.0 %. A more preferable amount of Ni is 0.2 % to 1.0 %.

The following elements may be added in predetermined amount(s) to the above-mentioned alloy singly or in combination to further improve strength and corrosion resistance after the bonding.

Fe: 0.1 % to 2.0 %

Fe has not only an effect of increasing the strength by dissolving in a solid state, but also an effect of preventing reduction in the strength at high temperature, particularly, by dispersing as crystalline precipitates. An amount of Fe to be added is preferably set to the range of 0.1 % to 2.0 % in consideration of balance between the strength and easiness in manufacturing.

Mn: 0.1 % to 2.0 %

Mn has an effect of increasing dispersion strengthening by forming an Al-Mn-Si-based intermetallic compound together with Si, or has an effect of increasing the strength with solid solution strengthening by dissolving in an aluminum mother phase in a solid state. An amount of Mn to be added is preferably set to the range of 0.1 % to 2.0 % in consideration of balance between the strength and easiness in manufacturing.

Ti: 0.01 % to 0.3 %, V: 0.01 % to 0.3 %

Ti and V have not only an effect of increasing the strength by dissolving in a solid state, but also an effect of preventing progress of corrosion in the direction of plate thickness through distribution in the layered form. Amounts of Ti and V to be added are each preferably set to the range of 0.01 % to 0.3 % in consideration of balance between the strength and easiness in manufacturing.

Cr: 0.05 % to 0.3 %

Cr acts not only to increase the strength with solid solution strengthening, but also to coarsen grains after the heating by being deposited as an Al-Cr-based intermetallic compound. An amount of Cr to be added is preferably set to the range of 0.05 % to 0.3 % in consideration of balance between the strength and easiness in manufacturing.

In: 0.05 % to 0.3 %, Sn: 0.05 % to 0.3 %

In and Sn have an effect of adding the action of a sacrificial anode. Amounts of In and Sn to be added are each preferably set to the range of 0.05 % to 0.3 % in consideration of balance between corrosion resistance and easiness in manufacturing.

Be: 0.0001 % to 0.1 %, Sr: 0.0001 % to 0.1 %, Bi: 0.0001 % to 0.1 %, Na: 0.0001 % to 0.1 %, Ca: 0.0001 % to 0.05 %

Moreover, one or more of Be: 0.0001 % to 0.1 %, Sr: 0.0001 % to 0.1 %, Bi: 0.0001 % to 0.1 %, Na: 0.0001 % to 0.1 %, and Ca: 0.0001 % to 0.05 % may be added as required. Those trace elements can improve the bonding performance through fine dispersion of Si grains, an improvement in fluidity of the liquid phase, and so on. When one ore more of Be, Sr, Bi, Na nd Ca is added, any of those additive components is preferably within the above-mentioned component range in consideration of balance between corrosion resistance and easiness in manufacturing.

B. Range of Mass Ratio of Liquid Phase

In the bleed bonding between the aluminum alloy and the copper alloy according to the present invention, the bonding requires to be performed at temperature at which a ratio of mass of a liquid phase generated in the aluminum alloy, which constitutes one of the members to be bonded, to total mass of the aluminum alloy (hereinafter referred to as a "liquid phase rate") is 5 % or more and 35 % or less. If the liquid phase rate is more than 35 %, a quantity of the generated liquid phase would be excessive, and the shape of the aluminum alloy could not be maintained, thus causing large deformation. On the other hand, if the liquid phase rate is less than 5 %, the bonding would be difficult to carry out. A preferable liquid phase rate is 5 to 30 %, and a more preferable liquid phase rate is 10 to 20 %.

Due to the above-described bonding behaviors, the shape in the vicinity of the bond junction is hardly changed after a bonding step. Stated in another way, a change in shape after the bonding, such as a bead generated with welding or a fillet generated with brazing, is hardly generated with the bonding method according to the present invention. Nevertheless, bonding based on the metallic connection can be obtained as with the welding method and the brazing method. Accordingly, such a change in shape after the bonding requires to be taken into consideration in design of a product. With the bleed bonding according to the present invention, a change in size after the bonding is very small, and product design can be performed with high accuracy.

It is very difficult to measure an actual liquid phase rate during the heating. Therefore, the liquid phase rate specified in the present invention is usually determined based on the lever rule from an alloy composition and a maximum achievable temperature by utilizing an equilibrium diagram. In an alloy system for which an equilibrium diagram is already clarified, the liquid phase rate can be determined based on the lever rule by utilizing that equilibrium diagram. On the other hand, regarding an alloy system for which an equilibrium diagram is not publicized, the liquid phase rate can be determined by employing equilibrium phase-diagram calculation software. A method of determining the liquid phase rate based on the lever rule by employing an alloy composition and a temperature is incorporated in the equilibrium phase-diagram calculation software. One example of the equilibrium phase-diagram calculation software is Thermo-Calc made by Thermo-Calc Software AB. Even for the alloy system for which the equilibrium diagram is clarified, the equilibrium phase-diagram calculation software may also be utilized for simplification because the result obtained by calculating the liquid phase rate with the equilibrium phase-diagram calculation software is the same as that obtained by determining the liquid phase rate based on the lever rule using the equilibrium diagram.

C. Method of Destroying Oxide Film

An oxide film is formed on a surface layer of the aluminum alloy, and the bonding is impeded by the oxide film. Accordingly, the oxide film has to be destroyed when carrying out the bonding. Practical methods of removing the oxide film will be described below. The following description is made in connection with the case of destroying the oxide film on the aluminum alloy. The oxide film on the aluminum alloy is very tough. As compared with the aluminum alloy, the copper alloy usually has such a property that even when an oxide film is formed thereon, the oxide film tends to be easily reduced and destroyed. Accordingly, when the oxide film on the aluminum alloy is destroyed, this implies that the oxide film on the copper alloy is also destroyed at the same time, and the bonding can be performed.

C-1 Destruction of Oxide Film with Flux

According to this method, flux is applied to at least the bond junction to destroy the oxide film. The flux used here may be fluoride-based flux, such as $KAlF_4$, $K_2AlF_5$, $K_2AlF_5 \cdot H_2O$, $K_3AlF_6$, $AlF_3$, $KZnF_3$ or $K_2SiF_6$, cesium-based flux such as $Cs_3AlF_6$, $CsAlF_4$, $CsAlF_4 \cdot 2H_2O$ or $Cs_2AlF_5 \cdot H_2O$, or chloride-based flux, such as $KCl$, $NaCl$, $LiCl$ or $ZnCl_2$, which are used in brazing of aluminum alloys. In the bleed welding, such flux is melted before generation of the liquid phase or before reaching a bonding temperature, and it reacts with the oxide film to destroy the oxide film.

When practicing this method, the bonding is carried out in a non-oxidizing atmosphere, such as nitrogen gas or argon gas, to suppress formation of the oxide film. In particular, when the fluoride-based flux is used, the bonding is preferably carried out in a non-oxidizing gas atmosphere in which oxygen concentration is held at 250 ppm or less and the dew point is held at -25° or lower.

Furthermore, in the case using the fluoride-based flux, if the aluminum alloy of one of the members to be bonded contains Mg in excess of 0.5 mass %, the flux and Mg react with each other, thus reducing the flux action of destroying the oxide film. In consideration of that point, an upper limit of Mg content in the aluminum alloy of the one member is restricted to 0.5 %.

C-2. Destruction of Oxide Film by Getter Action of Mg

This method is employed for an aluminum alloy in which the Mg content is 0.2 % to 2.0 %. When using such an aluminum alloy, the oxide film is destroyed and the bonding can be performed without applying the flux. In this case, the oxide film is destroyed by the getter action of Mg that is evaporated from the aluminum alloy when the aluminum alloy is melted and the liquid phase comes out to a surface layer. If the Mg content is less than 0.2 % in the aluminum alloy material, the getter action of Mg could not be obtained and satisfactory bonding could not be expected. If the Mg content is more than 2.0 %, rolling would be difficult to carry out and desired materials could not be manufactured as described above.

D. Bonding Conditions

With the basic features described above, the bleed bonding according to the present invention can realize reliable bonding while deformations of the bonded members are minimized. Furthermore, satisfactory bonding can be obtained by properly setting bonding conditions in consideration of the shape retention of each bonded member in respect of a bonding time, stress exerted on both the bonded members and a heating temperature during the bonding.

D-1. Bonding Time Required for Maintenance of Shape

In the present invention, the bonding time implies a time during which the liquid phase rate in the aluminum alloy as one member to be bonded generating the liquid phase, is 5 % or more. The bonding time is preferably within 3600 sec. By setting the bonding time to be within 3600 sec, a bonded body can be obtained which has a small change in shape from the body before the bonding. By setting the bonding time to be within 1800 sec, a precise bonded body in which the change in shape is further smaller can be obtained.

In addition, the bonding time is preferably 30 sec or longer. When the bonding time is 30 sec or longer, a securely bonded body can be obtained. When the bonding time is 60 sec, a more securely bonded body can be obtained.

D-2. Stress Exerted on Bonded Members during Bonding

In the bonding according to the present invention, pressure is not necessarily required to be applied to the bonding interface on condition that both the members to be bonded contact with each other at the bond junction. In a practical manufacturing process of a product, however, stress is exerted on both the members to be bonded from, e.g., a jig in order to fixedly hold both the members or reduce a clearance between the members. Stress is also generated in each of the members due to its own weight.

Stresses exerted on various locations in each bonded member can be determined from the shape and the weight of the member itself. Those stresses are calculated, for example, by employing a structural calculation program. In the present invention, the bonding is preferably carried out under a condition satisfying a formula: $P \leq 460 - 12V$, where P (kPa) is maximum one (maximum stress) of the stresses exerted on various locations in the bonded member which generates the liquid phase during the bonding, and V is a liquid phase rate in the aluminum alloy constituting the same bonded member. A value represented by the right side of the above formula is limit stress. If stress beyond the limit stress is exerted on the bonded member generating the liquid phase, there would be a risk that large deformation occurs in the bonded member even with the liquid phase rate being within 35 %.

D-3. Heating Temperature during Bonding

In the bonding according to the present invention, if the heating temperature during the bonding is 548 °C or higher, there would be a possibility that the bonded members may deform due to eutectic reaction between the aluminum alloy and the copper alloy. Therefore, the heating temperature during the bonding between the aluminum alloy and the copper alloy is set to be less than 548 °C.

Examples

The present invention will be described in more detail below in connection with Examples and Comparative Examples. Plural types of aluminum alloys and copper alloys were prepared and, after bonding both the alloys in accordance with the bleed bonding method of the present invention, bonding performance was evaluated (first embodiment). Furthermore, deformation rates of the aluminum alloys were evaluated and reviewed in detail (second embodiment).

First Embodiment (Examples 1 to 49 and Comparative Examples 1 to 8)

Table 1 lists compositions of aluminum alloys used as the one member to be bonded. After preparing an ingot of each alloy in Table 1, a rolled plate having a thickness of 2 mm was obtained through hot rolling and cold rolling. The rolled plate was subjected to a leveler and then annealed at 380 °C for 2 hours, whereby a rolled plate sample was obtained.

[Table 1]

Table 1

| Alloy No. | Alloy Components (mass%) | | | | | | | | | | | | | | | | | | C+2.4×S |
|---|---|---|---|---|---|---|---|---|---|---|---|---|---|---|---|---|---|---|---|
| | Cu | Si | Fe | Mg | Mn | Ti | V | Cr | Ni | Zn | In | Sn | Be | Sr | Bi | Na | Ca | Al | |
| A1 | 3.50 | 2.0 | 0.25 | - | - | - | - | - | - | - | - | - | - | - | - | - | - | balance | 8.3 |
| A2 | 3.40 | 6.2 | 0.25 | - | - | - | - | - | - | - | - | - | - | - | - | - | - | balance | 18.3 |
| A3 | 3.30 | 10.0 | 0.25 | - | - | - | - | - | - | - | - | - | - | - | - | - | - | balance | 27.3 |
| A4 | 4.20 | 9.8 | 0.25 | - | - | - | - | - | - | - | - | - | - | - | - | - | - | balance | 27.7 |
| A5 | 6.00 | 9.9 | 0.08 | - | - | - | - | - | - | - | - | - | - | - | - | - | - | balance | 29.8 |
| A6 | 7.80 | 10.0 | 0.23 | - | - | - | - | - | - | - | - | - | - | - | - | - | - | balance | 31.8 |
| A7 | 7.90 | 6.0 | 1.80 | - | - | - | - | - | - | - | - | - | - | - | - | - | - | balance | 22.3 |
| A8 | 7.90 | 2.1 | 0.25 | - | - | - | - | - | - | - | - | - | - | - | - | - | - | balance | 12.9 |
| A9 | 8.00 | 0.1 | 0.25 | - | - | - | - | - | - | - | - | - | - | - | - | - | - | balance | 8.2 |
| A10 | 7.80 | 0.1 | 0.25 | - | 0.12 | - | - | - | - | - | - | - | - | - | - | - | - | balance | 8.0 |
| A11 | 6.70 | 0.6 | 0.25 | - | 1.10 | - | - | - | - | - | - | - | - | - | - | - | - | balance | 8.1 |
| A12 | 5.50 | 1.0 | 0.25 | - | - | - | - | - | - | - | - | - | - | - | - | - | - | balance | 7.9 |
| A13 | 4.30 | 1.5 | 0.25 | - | - | - | - | - | - | - | - | - | - | - | - | - | - | balance | 7.9 |
| A14 | 4.00 | 3.00 | 0.25 | 0.40 | - | - | - | - | - | - | - | - | - | - | - | - | - | balance | 11.2 |
| A15 | 4.00 | 6.70 | - | - | - | - | - | - | - | - | - | - | - | - | - | - | - | balance | 20.1 |
| A16 | 4.00 | 6.70 | 0.25 | - | - | - | - | - | - | - | - | - | - | - | - | - | - | balance | 20.1 |
| A17 | 5.50 | 2.1 | 0.25 | - | - | 0.10 | - | - | - | - | - | - | - | - | - | - | - | balance | 10.5 |
| A18 | 5.50 | 5.5 | 0.25 | - | - | - | 0.10 | - | - | - | - | - | - | - | - | - | - | balance | 18.7 |
| A19 | 7.00 | 3.2 | 0.25 | - | - | - | - | 0.10 | - | - | - | - | - | - | - | - | - | balance | 14.7 |
| A20 | 7.00 | 8.8 | 0.12 | - | - | - | - | - | - | - | - | - | - | - | - | - | - | balance | 28.1 |
| A21 | 5.00 | 2.0 | 0.12 | - | - | - | - | - | - | - | - | - | - | - | - | - | - | balance | 9.8 |
| A22 | 5.00 | 2.0 | - | - | - | - | - | - | - | - | - | - | - | - | - | - | - | balance | 9.8 |
| A23 | 5.00 | 2.0 | 0.25 | - | 0.12 | - | - | - | - | - | - | - | - | - | - | - | - | balance | 9.8 |
| A24 | 5.00 | 2.0 | 0.25 | - | 0.32 | - | - | - | - | - | - | - | - | - | - | - | - | balance | 9.8 |
| A25 | 5.00 | 2.0 | 0.25 | - | 1.10 | - | - | - | - | - | - | - | - | - | - | - | - | balance | 9.8 |
| A26 | 5.00 | 2.0 | 0.25 | - | 1.40 | -- | - | - | - | - | - | - | - | - | - | - | - | balance | 9.8 |
| A27 | 5.00 | 2.0 | 0.25 | - | 1.90 | - | - | - | - | - | - | - | - | - | - | - | - | balance | 9.8 |
| A28 | 5.00 | 2.0 | 0.25 | 0.05 | - | - | - | - | - | - | - | - | - | - | - | - | - | balance | 9.8 |
| A29 | 5.00 | 2.0 | 0.25 | 0.15 | - | - | - | - | - | - | - | - | - | - | - | - | - | balance | 9.8 |
| A30 | 5.00 | 2.0 | 0.25 | 0.40 | - | - | - | - | - | - | - | - | - | - | - | - | - | balance | 9.8 |

EP 2 786 831 B1

| | 1 | 2 | 3 | 4 | 5 | 6 | 7 | 8 | 9 | 10 | 11 | 12 | 13 | 14 | 15 | 16 | 17 | 18 | | |
|---|---|---|---|---|---|---|---|---|---|---|---|---|---|---|---|---|---|---|---|---|
| A31 | 5.00 | 2.0 | 0.25 | 0.90 | - | - | - | - | - | - | - | - | - | - | - | - | - | - | balance | 9.8 |
| A32 | 5.00 | 2.0 | 0.25 | - | - | - | - | - | - | 0.08 | - | - | - | - | - | - | - | - | balance | 9.8 |
| A33 | 5.00 | 2.0 | 0.25 | - | - | - | - | - | - | 0.12 | - | - | - | - | - | - | - | - | balance | 9.8 |
| A34 | 5.00 | 2.0 | 0.25 | - | - | - | - | - | - | 2.00 | - | - | - | - | - | - | - | - | balance | 9.8 |
| A35 | 5.00 | 2.0 | 0.25 | - | - | - | - | - | - | 5.80 | - | - | - | - | - | - | - | - | balance | 9.8 |
| A36 | 5.00 | 2.0 | 0.25 | - | - | - | - | - | 0.08 | - | - | - | - | - | - | - | - | - | balance | 9.8 |
| A37 | 5.00 | 2.0 | 0.25 | - | - | - | - | - | 0.12 | - | - | - | - | - | - | - | - | - | balance | 9.8 |
| A38 | 5.00 | 2.0 | 0.25 | - | - | - | - | - | 0.80 | - | - | - | - | - | - | - | - | - | balance | 9.8 |
| A39 | 5.00 | 2.0 | 0.25 | - | - | - | - | - | 2.00 | - | - | - | - | - | - | - | - | - | balance | 9.8 |
| A40 | 5.00 | 2.0 | 0.25 | - | - | - | - | - | - | 1.00 | - | - | - | - | - | - | - | - | balance | 9.8 |
| A41 | 5.00 | 2.0 | 0.25 | 0.12 | 0.60 | - | - | 0.30 | 1.00 | 2.20 | - | - | - | - | - | - | - | - | balance | 9.8 |
| A42 | 5.00 | 2.0 | 0.25 | 0.50 | 0.13 | 0.07 | 0.07 | 0.05 | 0.10 | 0.20 | - | - | - | - | - | - | - | - | balance | 9.8 |
| A43 | 5.00 | 2.0 | 0.25 | - | - | 0.28 | 0.28 | - | - | 0.50 | - | - | - | - | - | - | - | - | balance | 9.8 |
| A44 | 5.00 | 2.0 | 0.25 | - | 1.80 | - | - | 0.05 | - | 2.50 | - | - | - | - | - | - | - | - | balance | 9.8 |
| A45 | 5.00 | 2.0 | 0.25 | - | - | - | - | - | 1.80 | - | - | - | - | - | 0.01 | - | - | - | balance | 9.8 |
| A46 | 5.00 | 2.0 | 0.25 | - | - | - | - | 0.30 | - | 5.00 | 0.10 | 0.10 | 0.10 | 0.01 | 0.01 | 0.01 | - | - | balance | 9.8 |
| A47 | 5.00 | 2.0 | 0.25 | 1.10 | - | - | - | - | - | - | 0.30 | 0.30 | 0.30 | 0.10 | 0.10 | 0.10 | - | - | balance | 9.8 |
| A48 | 5.00 | 2.0 | 0.25 | - | - | - | - | - | - | - | - | - | - | - | - | - | 0.02 | 0.01 | balance | 9.8 |
| A49 | 5.00 | 2.0 | 0.25 | 1.80 | - | - | - | - | - | - | - | - | - | - | - | - | - | - | balance | 9.8 |
| A50 | 2.80 | 2.0 | 0.25 | - | - | - | - | - | - | - | - | - | - | - | - | - | - | - | balance | 7.6 |
| A51 | 2.80 | 5.9 | 0.25 | - | - | - | - | - | - | - | - | - | - | - | - | - | - | - | balance | 17.0 |
| A52 | 7.50 | 0.0 | 0.25 | - | - | - | - | - | - | - | - | - | - | - | - | - | - | - | balance | 7.5 |
| A53 | 5.20 | 0.9 | 0.25 | - | - | - | - | - | - | - | - | - | - | - | - | - | - | - | balance | 7.4 |

Table 2 lists compositions of copper alloys used as the other member to be bonded. After preparing an ingot of each alloy in Table 2, a rolled plate having a thickness of 3 mm was obtained through hot rolling and cold rolling.

[Table 2]

EP 2 786 831 B1

Table 2

| Alloy No. | Alloy Components (mass%) | | | | | | | | | | | | | | | | | | |
|---|---|---|---|---|---|---|---|---|---|---|---|---|---|---|---|---|---|---|---|
| | C | Si | Fe | Cu | Mn | Mg | Zn | Ti | Al | Ni | Cr | Pb | V | Sn | P | S | N | O | H | Ca |
| B1 | - | - | - | 99.9 | - | - | - | - | - | - | - | - | - | - | 0.01 | - | | | | - |
| B2 | - | - | - | 81 | - | - | 10 | - | - | - | - | 6 | - | 3 | - | - | | | | - |
| B3 | - | - | 0.03 | 70 | - | - | balance | - | - | - | - | 0.02 | - | - | - | - | | | | - |
| B4 | - | - | 0.03 | 60 | - | - | balance | - | - | - | - | 0.02 | - | - | - | - | | | | - |

Bonding state evaluation tests were conducted using the rolled plate samples of the aluminum alloy and the copper alloy, prepared as described above, to evaluate the bonding rate and the deformation rate. For the bonding state tests, test pieces each having an inverted T-shape, illustrated in Fig. 4, was first fabricated by: cutting out two plates each having dimensions of 20 mm wide $\times$ 50 mm long from the rolled plate samples, smoothing respective end surfaces of the two plates with a milling cutter, and combining the two plates, i.e., an upper plate made of the aluminum alloy and a lower plate made of the copper alloy. Table 3 lists various combinations of the upper plate and the lower plate for the test pieces. The fluoride-based flux or the chloride-based flux or no flux was applied to bonding surfaces of both the plates constituting each test piece. Whether the flux was applied or not, and which type of flux was applied were also indicated in Table 3. In Table 3, "Cs" represents the cesium-based flux ($CsAlF_4$), "Cl" represents the chloride-based flux (containing 40 mass% of $ZnCl_2$ and other components NaCl - KCl - LiCl - LiF), and "-" represents the case where no flux was applied.

The test piece was heated to a predetermined temperature in a nitrogen atmosphere, an argon atmosphere, or a vacuum atmosphere held at the predetermined temperature (i.e., bonding temperature listed in Table 3) for a predetermined time, and then cooled naturally in a furnace. The nitrogen atmosphere and the argon atmosphere were controlled to be kept at an oxygen concentration of 100 ppm or less and at a dew point of -45°C or lower. The vacuum atmosphere was controlled to be kept at $10^{-5}$ torr. In any atmosphere, a temperature rising rate was set to 10 °C/min at 500 °C or higher. From the test piece after the heating for the bonding, the bonding rate, the deformation rate, and total rating were determined as described below.

(1) Evaluation of Bonding Rate

The bonding rate was determined as follows. A length of a region in the bond junction where the bonding was completed was measured using an ultrasonic flaw detector. The overall length of the bond junction of the test piece having the inverted T-shape was set to 50 mm, and the bonding rate (%) was calculated in terms of {length (mm) of the region in the bonded portion where the bonding was completed / 50 (mm)} $\times$ 100. The bonding rate was determined to be "excellent" (◎) when it was 95 % or more, "good" (○) when it was 90 % or more and less than 95 %, "fair" (△) when it was 25 % or more and less than 90 %, and "poor" (×) when it was less than 25 %.

(2) Evaluation of Deformation Rate

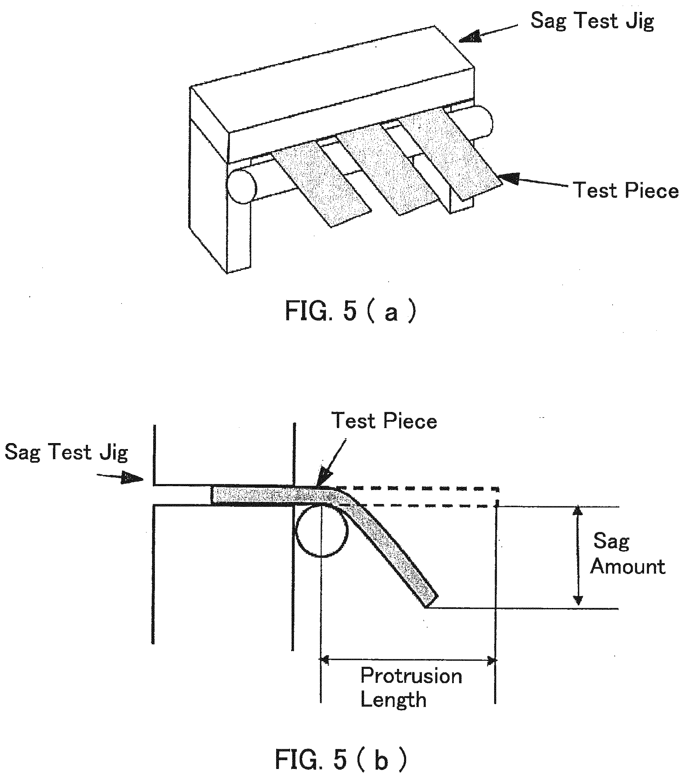

Each of test pieces for measurement of the deformation rate was fabricated by cutting out a plate with dimensions of 10 mm wide $\times$ 30 mm long from the above-mentioned rolled plate samples having the composition listed in Table 1. As illustrated in Fig. 5(a), the test piece was attached to a sag test jig and set with a protrusion length of 20 mm (Fig. 5(a) illustrates the case where three test pieces were set). Maximum stress P (N/m$^2$) measured in the form of a cantilever beam such as this sag test was determined from a bending moment M and a section modulus Z as follows:

$$P = M/Z = (W \times I^2/2) \, / \, (bh^2/6)$$

$$= ((g \times \rho \times I \times b \times h \, / \, I) \times I^2/2) \, / \, (bh^2/6)$$

$$= 3 \times g \times \rho \times I^2 \, / \, h$$

M: bending moment (N·m)
$W \times I^2/2$ in the case of cantilever with uniformly distributed load
Z: section modulus (m$^3$)
$bh^2/6$ in the case of rectangle in sectional shape
W: uniformly distributed load (N/m)
g: gravitational acceleration (m/s$^2$)
$\rho$: density of aluminum (kg/m$^3$)
I: protrusion length (m)
b: plate width (m)
h: plate thickness (m)

The maximum stress P is exerted on the root of the protrusion. In this test, the maximum stress P exerted on the test piece was 31 kPa as a result of calculating it by putting numerical values in the above expression. The maximum stress P is the same in the later-described second embodiment as well. The test piece was heated to a predetermined temperature in the atmosphere indicated in Table 3, held at the predetermined temperature (i.e., bonding temperature indicated in Table 3) for a predetermined time indicated in Table 3, and then cooled naturally in the furnace. The nitrogen atmosphere and the argon atmosphere were controlled to be kept at an oxygen concentration of 100 ppm or less and at a dew point of -45°C or lower. The vacuum atmosphere was controlled to be kept at $10^{-5}$ torr. In any atmosphere, a temperature rising rate was set to 10 °C/min at 500 °C or higher.

From the test piece after the heating, the deformation rate was determined as follows. A sag amount of the test piece after the heating was measured as illustrated in Fig. 5(b). The deformation rate (%) was calculated in terms of {sag amount (mm) / 20 (mm)} $\times$ 100 by employing the protrusion length (20 mm). The deformation rate was determined to be "excellent" (◎) when it was 50 % or less, "good" (○) when it was more than 50 % and 70 % or less, "fair" (△) when it was more than 70 % and 80 % or less, and "poor" (×) when it was more than 80 %.

(3) Total Rating

As a result of the above evaluation, total rating was made as follows. 5 Points were given to the "excellent" (◎)determination for each evaluation, 3 points were given to "good" (○), 0 point was given to "fair" (△), and -5 points were given to "poor" (×). Then, the result of the total rating was determined to be "excellent" (◎) when the total point was 10, "good" (○) when it was 6 or more and 9 or less, "fair" (△) when it was 1 or more and 5 or less, and "poor" (×) when it was less than 0. Total ratings "excellent" (◎), "good" (○), and "fair" (△) were regarded as acceptable, and "poor" (×) was regarded as unacceptable. The results of the bonding rate, the deformation rate, and the total rating are listed in Table 3 together with bonding conditions (i.e., temperature and calculated value of equilibrium liquid phase rate).

[Table 3]

Table 3

| No | Bonded Member | | Bonding Conditions | | | | | | | Evaluation Results | | |
|---|---|---|---|---|---|---|---|---|---|---|---|---|
| | Aluminum Alloy Material | Copper Alloy Material | Bonding Temp. (°C) | Equilibrium Liquid Phase Rate (Calculated Value) (%) | Holding Time at Bonding Temp. (sec) | Temp. at Liquid Phase Rate of Being 5% (°C) | Time of Liquid Phase Rate Being at 5% or more (sec) | Atmosphere | Flux | Bonding Rate | Deform- ation Rate | Total Rating |
| Example 1 | A1 | B1 | 545 | 5.0 | 30 | 545 | 30 | nitrogen | Cs | △ | ◎ | △ |
| Example 2 | A2 | B1 | 545 | 5.1 | 30 | 544 | 37 | nitrogen | Cs | △ | ◎ | △ |
| Example 3 | A3 | B1 | 545 | 5.1 | 30 | 544 | 37 | nitrogen | Cs | △ | ◎ | △ |
| Example 4 | A4 | B1 | 545 | 11.0 | 180 | 537 | 230 | nitrogen | Cs | ◎ | ◎ | ◎ |
| Example 5 | A5 | B1 | 540 | 18.0 | 180 | 525 | 279 | argon | Cs | ◎ | ◎ | ◎ |
| Example 6 | A6 | B1 | 545 | 34.5 | 180 | 525 | 311 | nitrogen | Cs | ◎ | △ | △ |
| Example 7 | A7 | B3 | 535 | 23.7 | 1600 | 531 | 1628 | vacuum | Cs | ◎ | ○ | ○ |
| Example 8 | A8 | B2 | 530 | 15.7 | 3300 | 525 | 3334 | nitrogen | Cs | ◎ | ○ | ○ |
| Example 9 | A9 | B1 | 546 | 5.0 | 180 | 546 | 180 | nitrogen | Cs | △ | ◎ | △ |
| Example 10 | A10 | B1 | 546 | 5.0 | 180 | 546 | 180 | nitrogen | Cs | △ | ◎ | △ |
| Example 11 | A11 | B1 | 545 | 5.4 | 180 | 544 | 187 | nitrogen | Cs | △ | ◎ | △ |

| No | Bonded Member | | Bonding Conditions | | | | | | | | Evaluation Results | | |
|---|---|---|---|---|---|---|---|---|---|---|---|---|---|
| | Aluminum Alloy Material | Copper Alloy Material | Bonding Temp. (°C) | Equilibrium Liquid Phase Rate (Calculated Value) (%) | Holding Time at Bonding Temp. (sec) | Temp. at Liquid Phase Rate of Being 5% (°C) | Time of Liquid Phase Rate Being at 5% or more (sec) | Atmosphere | Flux | Bonding Rate | Deform - ation Rate | Total Rating |
| Example 12 | A12 | B1 | 545 | 5.5 | 180 | 544 | 187 | nitrogen | Cs | △ | ◎ | △ |
| Example 13 | A13 | B1 | 545 | 6.2 | 180 | 543 | 194 | vacuum | Cs | △ | ◎ | △ |
| Example 14 | A14 | B1 | 540 | 10.9 | 180 | 531 | 242 | vacuum | - | ○ | ◎ | ○ |
| Example 15 | A15 | B1 | 545 | 8.0 | 180 | 541 | 204 | vacuum | Cs | △ | ◎ | △ |
| Example 16 | A16 | B1 | 545 | 9.1 | 180 | 540 | 212 | nitrogen | Cs | ○ | ◎ | ○ |
| Example 17 | A17 | B1 | 540 | 13.1 | 180 | 531 | 240 | nitrogen | Cs | ◎ | ◎ | ◎ |
| Example 18 | A18 | B1 | 545 | 18.6 | 180 | 529 | 283 | vacuum | Cs | ◎ | ◎ | ◎ |
| Example 19 | A19 | B3 | 530 | 11.5 | 180 | 525 | 214 | vacuum | Cs | ◎ | ◎ | ◎ |
| Example 20 | A20 | B1 | 540 | 23.1 | 180 | 525 | 279 | nitrogen | Cs | ◎ | ○ | ○ |
| Example 21 | A21 | B1 | 540 | 10.3 | 180 | 533 | 343 | nitrogen | Cl | ◎ | ◎ | ◎ |
| Example 22 | A22 | B1 | 540 | 9.4 | 180 | 534 | 218 | nitrogen | Cs | ○ | ◎ | ○ |
| Example 23 | A23 | B1 | 540 | 10.2 | 180 | 533 | 224 | nitrogen | Cs | ◎ | ◎ | ◎ |

| No | Bonded Member | | Bonding Conditions | | | | | | | Evaluation Results | | |
|---|---|---|---|---|---|---|---|---|---|---|---|---|
| | Aluminum Alloy Material | Copper Alloy Material | Bonding Temp. (°C) | Equilibrium Liquid Phase Rate (Calculated Value) (%) | Holding Time at Bonding Temp. (sec) | Temp. at Liquid Phase Rate of Being 5% (°C) | Time of Liquid Phase Rate Being at 5% or more (sec) | Atmosphere | Flux | Bonding Rate | Deform - ation Rate | Total Rating |
| Example 24 | A24 | B1 | 540 | 9.8 | 180 | 534 | 221 | nitrogen | Cs | ○ | ◎ | ○ |
| Example 25 | A25 | B1 | 540 | 8.3 | 180 | 534 | 217 | nitrogen | Cs | △ | ◎ | △ |
| Example 26 | A26 | B1 | 545 | 9.0 | 180 | 534 | 249 | nitrogen | Cs | ○ | ◎ | ○ |
| Example 27 | A27 | B1 | 545 | 7.7 | 180 | 538 | 226 | vacuum | Cs | △ | ◎ | △ |
| Example 28 | A28 | B1 | 545 | 12.9 | 180 | 532 | 267 | nitrogen | Cs | ◎ | ◎ | ◎ |
| Example 29 | A29 | B1 | 545 | 13.5 | 180 | 529 | 284 | nitrogen | Cs | ◎ | ◎ | ◎ |
| Example 30 | A30 | B1 | 545 | 14.9 | 180 | 522 | 330 | nitrogen | Cs | ○ | ◎ | ○ |
| Example 31 | A31 | B4 | 525 | 10.8 | 180 | 517 | 231 | vacuum | - | ◎ | ◎ | ◎ |
| Example 32 | A32 | B1 | 540 | 10.5 | 180 | 533 | 227 | nitrogen | Cs | ◎ | ◎ | ◎ |
| Example 33 | A33 | B1 | 540 | 10.5 | 180 | 533 | 227 | nitrogen | Cs | ◎ | ◎ | ◎ |
| Example 34 | A34 | B2 | 540 | 13.1 | 180 | 529 | 253 | nitrogen | Cs | ◎ | ◎ | ◎ |
| Example 35 | A35 | B1 | 545 | 19.4 | 180 | 521 | 339 | nitrogen | Cs | ◎ | ◎ | ◎ |

(continued)

| No | Bonded Member | | Bonding Conditions | | | | | | | Evaluation Results | | |
|---|---|---|---|---|---|---|---|---|---|---|---|---|
| | Aluminum Alloy Material | Copper Alloy Material | Bonding Temp. (°C) | Equilibrium Liquid Phase Rate (Calculated Value) (%) | Holding Time at Bonding Temp. (sec) | Temp. at Liquid Phase Rate of Being 5% (°C) | Time of Liquid Phase Rate Being at 5% or more (sec) | Atmosphere | Flux | Bonding Rate | Deform- ation Rate | Total Rating |
| Example 36 | A36 | B1 | 540 | 11.8 | 180 | 529 | 251 | nitrogen | Cs | ◎ | ◎ | ◎ |
| Example 37 | A37 | B2 | 540 | 12.2 | 180 | 530 | 247 | nitrogen | Cl | ◎ | ◎ | ◎ |
| Example 38 | A38 | B1 | 540 | 15.2 | 180 | 533 | 224 | nitrogen | Cs | ◎ | ◎ | ◎ |
| Example 39 | A39 | B1 | 545 | 15.2 | 180 | 536 | 236 | nitrogen | Cs | ◎ | ◎ | ◎ |
| Example 40 | A40 | B1 | 540 | 12.0 | 180 | 531 | 239 | nitrogen | Cs | ◎ | ◎ | ◎ |
| Example 41 | A41 | B1 | 540 | 13.1 | 180 | 528 | 256 | nitrogen | Cs | ◎ | ◎ | ◎ |
| Example 42 | A42 | B2 | 540 | 14.2 | 180 | 519 | 319 | nitrogen | - | ○ | ◎ | ○ |
| Example 43 | A43 | B1 | 540 | 11.3 | 180 | 532 | 234 | nitrogen | Cs | ◎ | ◎ | ◎ |
| Example 44 | A44 | B1 | 545 | 10.8 | 180 | 529 | 287 | nitrogen | Cs | ◎ | ◎ | ◎ |
| Example 45 | A45 | B1 | 540 | 13.1 | 180 | 536 | 207 | nitrogen | Cs | ◎ | ◎ | ◎ |
| Example 46 | A46 | B2 | 540 | 16.4 | 180 | 522 | 295 | nitrogen | Cl | ◎ | ◎ | ◎ |
| Example 47 | A47 | B1 | 540 | 10.0 | 3900 | 533 | 3947 | nitrogen | Cs | ◎ | Δ | Δ |

| No | Bonded Member | | Bonding Conditions | | | | | | | Evaluation Results | | |
|---|---|---|---|---|---|---|---|---|---|---|---|---|
| | Aluminum Alloy Material | Copper Alloy Material | Bonding Temp. (°C) | Equilibrium Liquid Phase Rate (Calculated Value) (%) | Holding Time at Bonding Temp. (sec) | Temp. at Liquid Phase Rate of Being 5% (°C) | Time of Liquid Phase Rate Being at 5% or more (sec) | Atmosphere | Flux | Bonding Rate | Deform - ation Rate | Total Rating |
| Example 48 | A48 | B4 | 535 | 6.0 | 15 | 534 | 20 | nitrogen | Cs | △ | ◎ | △ |
| Example 49 | A49 | B1 | 535 | 14.8 | 180 | 526 | 239 | vacuum | - | ◎ | ◎ | ◎ |
| Com. Ex. 1 | A50 | B1 | 545 | 0.4 | 180 | 552 | 0 | nitrogen | Cs | × | ◎ | × |
| Com. Ex. 2 | A51 | B1 | 545 | 1.1 | 180 | 551 | 0 | nitrogen | Cs | × | ◎ | × |
| Com. Ex. 3 | A52 | B1 | 545 | 0.0 | 180 | 551 | 0 | nitrogen | Cs | × | ◎ | × |
| Com. Ex. 4 | A53 | B1 | 545 | 3.6 | 180 | 552 | 0 | nitrogen | Cs | × | ◎ | × |
| Com. Ex. 5 | A5 | B1 | 555 | 38.1 | 180 | 525 | 376 | nitrogen | Cs | ◎ | × | × |
| Com. Ex. 6 | A5 | B1 | 560 | 53.0 | 180 | 525 | 409 | nitrogen | Cs | ◎ | × | × |
| Com. Ex. 7 | A28 | B1 | 540 | 11.1 | 180 | 532 | 234 | vacuum | - | × | ◎ | × |
| Com. Ex. 8 | A31 | B1 | 540 | 16.0 | 180 | 517 | 328 | nitrogen | Cs | × | ◎ | × |

**EP 2 786 831 B1**

As seen from Table 3, in Examples 1 to 49, since the liquid phase rate in the aluminum alloy during the heating for the bonding was in the proper range, satisfactory bonding was completed and the total rating was acceptable.

On the other hand, looking at Comparative Examples from the viewpoint of the liquid phase rate, in Comparative Examples 1, 2 and 4, since the rate of the liquid phase generated in the aluminum alloy was too low, the bonding rate was low and the total rating was unacceptable. In Comparative Example 3, since the liquid phase was not generated in the aluminum alloy, the bonding was not completed and the total rating was unacceptable. In Comparative Examples 5 and 6, since the rate of the liquid phase generated in the aluminum alloy was too high, the deformation rate was large and the total rating was unacceptable.

Looking at the relationship between the composition of the brazing filler material and the use or non-use of the flux, in Comparative Example 7, because the flux was not applied in spite of the Mg content of the aluminum alloy being less than 0.2 %, the bonding was not completed and the total rating was unacceptable. In contrast, in Comparative Example 8, because the flux was applied in spite of the Mg content of the aluminum alloy being more than 0.5 %, the bonding was not completed and the total rating was unacceptable.

Second Embodiment (Examples 50 to 64 and Reference Examples 1 to 4)

Here, a sag test was conducted to evaluate the stress P which the bonded member can endure during the heating. In this evaluation, the conditions (kind of alloy and heating condition) under which the total rating was determined to be acceptable in the evaluation in the first embodiment were selected, and only evaluation of the deformation rate of the aluminum alloy was conducted in more detail. The aluminum alloys listed in Table 1 were selected and used as test pieces. Each plate of the test pieces had dimensions of 1 mm thick, 15 mm wide, and 60 mm long. Each of the test pieces was attached to the sag test jig illustrated in Fig. 5(a), and was set with the protrusion length varying from 20 to 50 mm.

A practical test method was carried out as follows. The test piece was heated to a predetermined temperature in the nitrogen atmosphere, held at the predetermined temperature for 180 sec, and then cooled naturally in the furnace. The nitrogen atmosphere was controlled to be kept at an oxygen concentration of 100 ppm or less and at a dew point of -45°C or lower. A temperature rising rate was set to 10 °C/min at 500 °C or higher.

The deformation rate was determined from the test piece after the heating as follows. A sag amount of the test piece after the heating was measured as illustrated in Fig. 5(b). The deformation rate (%) was calculated in terms of {sag amount (mm) / 20 (mm)} × 100 by employing each of the set protrusion lengths. The deformation rate was determined to be "excellent" (◎) when it was less than 50 %, "good" (○) when it was not less than 50 % and less than 70 %, and "poor" (×) when it was 70 % or more. Total ratings "excellent" (◎) and "good" (○) were regarded as acceptable, and "poor" (×) was regarded as unacceptable. The deformation rate, the protrusion length, the stress, and the limit stress are listed in Table 4 together under heating conditions (i.e., heating temperature, liquid phase rate, and holding time at heating temperature).

[Table 4]

Table 4

|  | Alloy No. | Heating Conditions | | | Test Results | | | |
|---|---|---|---|---|---|---|---|---|
|  |  | Heating Temp. (°C) | Equilibrium Liquid Phase Rate (Calculated Value) (%) | Holding Time at Heating Temp. (sec) | Protrusion Length (mm) | Stress P(kPa) | Limit Stress 460-12v (kPa) | Deformation Rate |
| Example 50 | A8 | 525 | 12 | 180 | 20 | 31 | 317 | ◎ |
| Example 51 | A8 | 525 | 12 | 180 | 40 | 125 | 317 | ◎ |
| Example 52 | A8 | 525 | 12 | 180 | 60 | 280 | 317 | Δ |

(continued)

| | Alloy No. | Heating Conditions | | | Test Results | | | |
|---|---|---|---|---|---|---|---|---|
| | | Heating Temp. (°C) | Equilibrium Liquid Phase Rate (Calculated Value) (%) | Holding Time at Heating Temp. (sec) | Protrusion Length (mm) | Stress P(kPa) | Limit Stress 460-12v (kPa) | Deformation Rate |
| Example 53 | A8 | 535 | 20 | 180 | 20 | 31 | 224 | ◎ |
| Example 54 | A8 | 535 | 20 | 180 | 40 | 125 | 224 | ○ |
| Example 55 | A8 | 545 | 23 | 180 | 20 | 31 | 179 | ◎ |
| Example 56 | A8 | 545 | 23 | 180 | 40 | 125 | 179 | ○ |
| Example 57 | A35 | 525 | 8 | 180 | 20 | 31 | 358 | ◎ |
| Example 58 | A35 | 525 | 8 | 180 | 40 | 125 | 358 | ◎ |
| Example 59 | A35 | 525 | 8 | 180 | 60 | 280 | 358 | ○ |
| Example 60 | A35 | 535 | 16 | 180 | 20 | 31 | 272 | ◎ |
| Example 61 | A35 | 535 | 16 | 180 | 40 | 125 | 272 | ○ |
| Example 62 | A35 | 545 | 19 | 180 | 20 | 31 | 227 | ◎ |
| Example 63 | A35 | 545 | 19 | 180 | 40 | 125 | 227 | ○ |
| Example 64 | A35 | 545 | 19 | 180 | 50 | 190 | 227 | △ |
| Ref. Ex. 1 | A8 | 535 | 20 | 180 | 60 | 280 | 224 | × |
| Ref. Ex. 2 | A8 | 545 | 23 | 180 | 50 | 190 | 179 | × |
| Ref. Ex. 3 | A35 | 535 | 16 | 180 | 60 | 280 | 272 | × |
| Ref. Ex. 4 | A35 | 545 | 19 | 180 | 60 | 280 | 227 | × |

As seen from Table 4, in Examples 50 to 64, the stress P (kPa) was not larger than the limit stress (460 - 12V) where V (%) was the liquid phase rate. As a result, in any of those Examples, the sag amount was less than 70 % of the protrusion length, and the satisfactory deformation rate was obtained. On the other hand, in Reference Examples 1 to 4, the stress P (kPa) was larger than the limit stress (460 - 12V). As a result, in any of those Reference Examples, the sag amount was 70 % or more of the protrusion length, and the deformation rate was large.

From the results described above, it was confirmed that, when the stress P (kPa) exerted on the bonded member was not larger than the limit stress (460 - 12V), deformation of the bonded member between before and after the bonding can be held within 5 %, and a structure with high accuracy can be manufactured.

Industrial Applicability

The present invention can provide a novel bonded body made of an aluminum alloy and a copper alloy and bonded by a novel bonding method which ensures satisfactory bonding performance, which hardly causes deformation attributable to bonding, and which has high reliability, and further provide the novel bonding method for the bonded body. Thus, the present invention is very valuable in industrial fields. The present invention can efficiently manufacture members and parts having such features that they have many bonding points and complicated shapes. The present invention is useful when applied to, for example, heat exchanging apparatuses, including a heat exchanger of fin tube type, piping, and so on in a refrigeration circuit of a refrigerating and air-conditioning apparatus.

**Claims**

1. A bonded body of an aluminum alloy and copper or a copper alloy obtained by employing the aluminum alloy as one member to be bonded and the copper or copper alloy as the other member to be bonded, the one member and the other member being bonded to each other through metallic connection, the aluminum alloy that constitutes the one member to be bonded consisting of Cu: 3.0 mass % to 8.0 mass % and Si: 0.1 mass % to 10 mass %, optionally at least one of Mg: 0.05 mass % to 2.0 mass %, Ni: 0.05 mass % to 2.0 mass %, and Zn: 0.05 mass % to 6.0 mass %, and further optionally at least one of Fe: 0.1 mass % to 2.0 mass %, Mn: 0.1 mass % to 2.0 mass %, Ti: 0.01 mass % to 0.3 mass %, V: 0.01 mass % to 0.3 mass %, Cr: 0.05 mass % to 0.3 mass %, In: 0.05 mass % to 0.3 mass %, Sn: 0.05 mass % to 0.3 mass %, Be: 0.0001 mass % to 0.1 mass %, Sr: 0.0001 mass % to 0.1 mass %, Bi: 0.0001 mass % to 0.1 mass %, Na: 0.0001 mass % to 0.1 mass %, Ca: 0.0001 mass % to 0.05 mass %, with balance being Al and inevitable impurities, and satisfying the chemical formula: $C + 2.4 \times S \geq 7.8$ where C (mass %) is a Cu concentration and S (mass %) is a Si composition, and the copper or copper alloy that constitutes the other member to be bonded having a higher solidus temperature than the one member.

2. A bonding method for the bonded body according to Claim 1, wherein the bonding is performed in a non-oxidizing atmosphere in a state of a fluoride-based flux, a cesium-based flux, or a chloride-based flux being applied to between the members to be bonded at temperature less than 548°C at which a ratio of mass of a liquid phase generated in the aluminum alloy, which constitutes the one member, to total mass of the aluminum alloy is 5 % or more and 35 % or less, and wherein in case of fluoride based flux a Mg content of the aluminum alloy constituting the one member is restricted to be 0.5 mass % or less.

3. A bonding method for the bonded body according to Claim 1, wherein the aluminum alloy constituting the one member contains Mg: 0.2 mass % to 2.0 mass %, and the bonding is performed in vacuum or a non-oxidizing atmosphere at temperature less than 548°C at which a ratio of mass of a liquid phase generated in the aluminum alloy, which constitutes the one member, to total mass of the aluminum alloy is 5 % or more and 35 % or less.

4. The bonding method for the bonded body according to Claim 2 or 3, wherein, in the aluminum alloy constituting the one member, a time during which the ratio of the mass of the liquid phase generated in the aluminum alloy to the total mass of the aluminum alloy is 5 % or more and 35 % or less is 30 sec or longer and 3600 sec or shorter.

5. The bonding method for the bonded body according to any one of Claims 2 to 4, wherein the bonding is performed under conditions satisfying $P \leq 460 - 12V$ where P (kPa) is maximum stress generated in the aluminum alloy constituting the one member, and V (%) is the ratio of the mass of the liquid phase generated in the aluminum alloy to the total mass of the aluminum alloy.

**Patentansprüche**

1. Verbundener Körper aus einer Aluminiumlegierung und Kupfer oder einer Kupferlegierung, erhalten durch Verwenden der Aluminiumlegierung als ein zu verbindendes Element und des Kupfers oder der Kupferlegierung als das andere zu verbindende Element, wobei das eine Element und das andere Element durch metallische Verbindung aneinander gebunden sind, wobei die Aluminiumlegierung, die das eine zu verbindende Element bildet, aus Cu: 3,0 Masse-% bis 8,0 Masse-%, und Si: 0,1 Masse-% bis 10 Masse-%, gegebenenfalls wenigstens einem von Mg: 0,05 Masse-% bis 2,0 Masse-%, Ni: 0,05 Masse-% bis 2,0 Masse-%, und Zn: 0,05 Masse-% bis 6,0 Masse-%, und ferner gegebenenfalls wenigstens einem von Fe: 0,1 Masse-% bis 2,0 Masse-%, Mn: 0,1 Masse-% bis 2,0 Masse-%, Ti: 0,01 Masse-% bis 0,3 Masse-%, V: 0,01 Masse-% bis 0,3 Masse-%, Cr: 0,05 Masse-% bis 0,3 Masse-%, In: 0,05 Masse-% bis 0,3 Masse-%, Sn: 0,05 Masse-% bis 0,3 Masse-%, Be: 0,0001 Masse-% bis 0,1 Masse-%, Sr: 0,0001 Masse-% bis 0,1 Masse-%, Bi: 0,0001 Masse-% bis 0,1 Masse-%, Na: 0,0001 Masse-% bis 0,1 Masse-%, Ca: 0,0001 Masse-% bis 0,05 Masse-%, wobei es sich bei dem Rest um Al und unvermeidbare Verunreinigungen handelt, besteht und der chemischen Formel: $C + 2,4 \times S \geq 7,8$ entspricht, wobei C (Masse-%) eine Cu-Konzentration ist und S (Masse-%) eine Si-Zusammensetzung ist, und das Kupfer oder die Kupferlegierung, das/die das andere zu verbindende Element bildet, eine höhere Solidustemperatur als das eine Element aufweist.

2. Verbindungsverfahren für den verbundenen Körper gemäß Anspruch 1, wobei das Verbinden in einer nichtoxidierenden Atmosphäre in einem Zustand mit einem Flussmittel auf Fluoridbasis, einem Flussmittel auf Caesiumbasis oder einem Flussmittel auf Chloridbasis, das zwischen die zu verbindenden Elemente aufgebracht ist, bei einer Temperatur von niedriger als 548 °C durchgeführt wird, bei der das Verhältnis der Masse einer flüssigen Phase, die in der Aluminiumlegierung entsteht, die das eine Element bildet, zu der Gesamtmasse der Aluminiumlegierung 5 % oder mehr und 35 % oder weniger beträgt, und wobei im Fall eines Flussmittels auf Fluoridbasis der Mg-Gehalt der Aluminiumlegierung, die das eine Element bildet, auf 0,5 Masse-% oder weniger beschränkt ist.

3. Verbindungsverfahren für den verbundenen Körper gemäß Anspruch 1, wobei die Aluminiumlegierung, die das eine Element bildet, Mg: 0,2 Masse-% bis 2,0 Masse-% enthält und das Verbinden an Unterdruck oder einer nichtoxidierenden Atmosphäre bei einer Temperatur von niedriger als 548 °C durchgeführt wird, bei der das Verhältnis der Masse einer flüssigen Phase, die in der Aluminiumlegierung entsteht, die das eine Element bildet, zu der Gesamtmasse der Aluminiumlegierung 5 % oder mehr und 35 % oder weniger beträgt.

4. Verbindungsverfahren für den verbundenen Körper gemäß Anspruch 2 oder 3, wobei für die Aluminiumlegierung, die das eine Element bildet, die Zeit, während der das Verhältnis der Masse der flüssigen Phase, die in der Aluminiumlegierung entsteht, zu der Gesamtmasse der Aluminiumlegierung 5 % oder mehr und 35 % oder weniger beträgt, 30 s oder länger und 3600 s oder kürzer ist.

5. Verbindungsverfahren für den verbundenen Körper gemäß einem der Ansprüche 2 bis 4, wobei das Verbinden unter Bedingungen durchgeführt wird, die P ≤ 460 - 12V entsprechen, wobei P (kPa) die Maximalspannung ist, die in der Aluminiumlegierung entsteht, die das eine Element bildet, und V (%) das Verhältnis der Masse der flüssigen Phase, die in der Aluminiumlegierung entsteht, zu der Gesamtmasse der Aluminiumlegierung ist.

**Revendications**

1. Corps collé d'un alliage d'aluminium et de cuivre ou d'un alliage de cuivre obtenu par l'emploi de l'alliage d'aluminium en tant que premier élément à coller et du cuivre ou de l'alliage de cuivre en tant qu'autre élément à coller, le premier élément et l'autre élément étant collés l'un à l'autre par une liaison métallique, l'alliage d'aluminium qui constitue le premier élément à coller étant de constitué de Cu à hauteur de 3,0 % en masse à 8,0 % en masse et de Si à hauteur de 0,1 % en masse à 10 % en masse, éventuellement d'au moins l'un de Mg à hauteur de 0,05 % en masse à 2,0 % en masse, de Ni à hauteur de 0,05 % en masse à 2,0 % en masse et de Zn à hauteur de 0,05 % en masse à 6,0 % en masse et éventuellement en outre d'au moins l'un de Fe à hauteur de 0,1 % en masse à 2,0 % en masse, de Mn à hauteur de 0,1 % en masse à 2,0 % en masse, de Ti à hauteur de 0,01 % en masse à 0,3 % en masse, de V à hauteur de 0,01 % en masse à 0,3 % en masse, de Cr à hauteur de 0,05 % en masse à 0,3 % en masse, d'In à hauteur de 0,05 % en masse à 0,3 % en masse, de Sn à hauteur de 0,05 % en masse à 0,3 % en masse, de Be à hauteur de 0, 0001 % en masse à 0,1 % en masse, de Sr à hauteur de 0,0001 % en masse à 0,1 % en masse, de Bi à hauteur de 0,0001 % en masse à 0,1 % en masse, de Na à hauteur de 0,0001 % en masse à 0,1 % en masse, de Ca à hauteur de 0,0001 % en masse à 0,05 % en masse, le reste étant de l'Al et des impuretés inévitables, et satisfaisant à la formule chimique : C + 2,4 x S ≥ 7,8 où C (en % en masse) est une concentration en Cu et S (en % en masse) est une composition de Si, et le cuivre ou l'alliage de cuivre qui constitue l'autre élément à coller ayant une température de solidus plus élevée que celle du premier élément.

2. Procédé de collage pour le corps collé selon la revendication 1, dans lequel le collage est effectué dans une atmosphère non oxydante dans un état où un fondant à base de fluorure, un fondant à base de césium ou un fondant à base de chlorure est appliqué entre les éléments à coller à une température inférieure à 548 °C à laquelle un rapport de la masse d'une phase liquide produite dans l'alliage d'aluminium, qui constitue le premier élément, à la masse totale de l'alliage d'aluminium est supérieur ou égal à 5 % et inférieur ou égal à 35 % et dans lequel dans le cas de fondant à base de fluorure une teneur en Mg de l'alliage d'aluminium constituant le premier élément est limitée pour être inférieure ou égale à 0,5 % en masse.

3. Procédé de collage pour le corps collé selon la revendication 1, dans lequel l'alliage d'aluminium constituant le premier élément contient du Mg à hauteur de 0,2 % en masse à 2,0 % en masse et le collage est effectué sous vide ou dans une atmosphère non oxydante à une température inférieure à 548 °C à laquelle un rapport de la masse d'une phase liquide produite dans l'alliage d'aluminium, qui constitue le premier élément, à la masse totale de l'alliage d'aluminium est supérieur ou égal à 5 % et inférieur ou égal à 35 %.

4. Procédé de collage pour le corps collé selon la revendication 2 ou 3, dans lequel, dans l'alliage d'aluminium constituant le premier élément, une durée pendant laquelle le rapport de la masse de la phase liquide produite dans l'alliage d'aluminium à la masse totale de l'alliage d'aluminium est supérieur ou égal à 5 % et inférieur ou égal à 35 % est supérieure ou égale à 30 s et inférieure ou égale à 3600 s.

5. Procédé de collage pour le corps collé selon l'une quelconque des revendications 2 à 4, dans lequel le collage est effectué dans des conditions satisfaisant à la relation $P \leq 460 - 12V$ où $P$ (en kPa) est la contrainte maximale produite dans l'alliage d'aluminium constituant le premier élément et $V$ (en %) est le rapport de la masse de la phase liquide produite dans l'alliage d'aluminium à la masse totale de l'alliage aluminium.

FIG. 1

FIG. 2 ( a )     FIG. 2 ( b )     FIG. 2 ( c )     FIG. 2 ( d )

FIG. 3 ( a )　　　FIG. 3 ( b )　　　FIG. 3 ( c )　　　FIG. 3 ( d )

FIG. 4

26

FIG. 5 ( a )

FIG. 5 ( b )

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S52048542 A
- JP 2002361408 A
- JP H09085467 A
- JP 2003048077 A